# EUROPEAN PATENT APPLICATION

(11) **EP 2 224 707 A1**
(43) Date of publication of application: **01.09.2010**
(21) Application number: 10154476.5
(22) Date of filing: 24.02.2010
(51) Int. Cl.: H04M 1/725, G06Q 10/00

(54) **Call management systems and methods**

(30) Priority: 25.02.2009 TW 98105921
(71) Applicant: HTC Corporation, Taoyuan County 330 (TW)
(72) Inventor: Chen, Yu-Chuan, 330, Taoyuan City, Taoyuan County (TW)
(74) Representative: Schultenkämper, Johannes

(57) **Abstract**

Call management systems and methods are provided. The call management system includes a touch-scnsitivc display unit, and a processing unit. The touch-sensitive display unit displays data including at least a body and a phone number, and receives a selection corresponding to the phone number. In response to the selection corresponding to the phone number, the processing unit automatically dials according to the phone number, and displays the body of the data during dialing via the touch-sensitive display unit.

## Description

### CROSS REFERENCE TO RELATED APPLICATIONS

This Application claims priority of Taiwan Patent Application No. 098105921, filed on February 25, 2009, the entirety of which is incorporated by reference herein.

### BACKGROUND OF THE INVENTION

### Field of the Invention

The disclosure relates generally to call management systems and methods, and, more particularly to call management systems and methods that simultaneously display a data body during dialing.

### Description of the Related Art

Recently, portable devices, such as handheld devices, have become more and more technically advanced and multifunctional. For example, a handheld device may have telecommunication capabilities, e-mail message capabilities, an advanced address book management system, a media playback system, and various other functions. Due to increased convenience and functions of the devices, these devices have become necessities of life.

Currently, handheld device applications are always operated independently. For example, users can use an email application to send/receive email messages, use a calendar application to manage schedules and/or receive calendar notifications, and use a dial application to make a call. In some situations, when users want to make a call based on information, such as a phone number recorded in an email message and/or a calendar, users must execute the email application/calendar application, and memorize the information recorded in the email message and/or the calendar by themselves. Then, users switch to execute the dial application, and manually input the memorized information to dial accordingly. Additionally, in some specific applications, such as a conference call, users must also memorize an authentication code, such as PIN code, in addition to the phone number before executing the dial application. Generally, the authentication code is also composed by a series of numbers. After the phone umber is dialed, the authentication code must be input to a conference bridge for authentication. Since it is difficult to memorize the authentication code with a series of numbers, users normally manually write down the phone number and the authentication code for input.

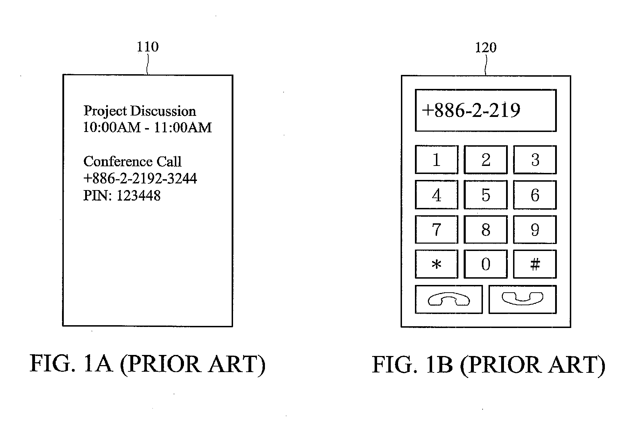

For example, a user can view a specific calendar via an interface 110 of a calendar application, as shown in Fig. 1A. When the user wants to make a call to join a conference call, the user must memorize the phone number and the authentication code shown in the interface 110, and switch to an interface 120 of a dial application, as shown in Fig. 1B. Then, the phone number is input for dialing, and the authentication code is input for authentication. The described conventional operations are complex and inconvenient for users.

### BRIEF SUMMARY OF THE INVENTION

Call management systems and methods are provided.

An embodiment of a call management system includes a touch-sensitive display unit, and a processing unit. The touch-sensitive display unit displays data, and receives a selection corresponding to a phone number. In response to the selection corresponding to the phone number, the processing unit automatically dials according to the phone number, and displays the body of the data during dialing via the touch-sensitive display unit.

In an embodiment of a call management method, data is displayed. The data includes a body and a phone number. Then, a selection corresponding to the phone number is received. In response to the selection corresponding to the phone number, a call is automatically made according to the phone number, and the body of the data is simultaneously displayed during dialing.

In an embodiment of a call management method, data is obtained. The data includes a body and a phone number. Then, a call is made according to the phone number, and the body of the data is simultaneously displayed during dialing.

Call management systems and methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1A is a schematic diagram illustrating an interface of a calendar application;

Fig. 1B is a schematic diagram illustrating an interface of a dial application;

Fig. 2 is a schematic diagram illustrating an embodiment of a call management system of the invention;

Fig. 3 is a flowchart of an embodiment of a call management method of the invention;

Fig. 4A is a schematic diagram illustrating an embodiment of an example of a calendar of the invention;

Fig. 4B is a schematic diagram illustrating an embodiment of a dialing example of the invention; and

Fig. 5 is a flowchart of another embodiment of a call management method of the invention.

### DETAILED DESCRIPTION OF THE INVENTION

Call management systems and methods are provided.

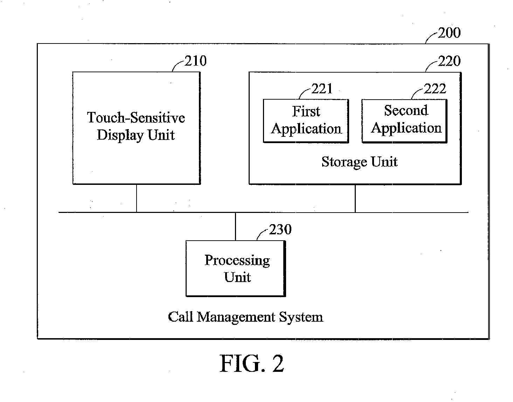

Fig. 2 is a schematic diagram illustrating an embodiment of a call management system of the invention. The call management system 200 can be used in an electronic device, such as a portable device comprising handheld devices such as a media player, a PDA (Personal Digital Assistant), a GPS (Global Positioning System) device, a smart phone, a mobile phone, a MID (Mobile Internet Device, MID), and a Netbook.

The call management system 200 comprises a touch-sensitive display unit 210, a storage unit 220, and a processing unit 230. The touch-sensitive display unit 210 is a screen integrated with a touch-sensitive device (not shown). The touch-sensitive device has a touch-sensitive surface comprising sensors in at least one dimension to detect contact and movement of an input tool, such as a stylus or finger on the touch-sensitive surface. The touch-sensitive display unit 210 can display related data, and/or related figures and interfaces. The storage unit 220 comprises a first application 221 and a second application 222. In some embodiments, the first application 221 may be an email application or a calendar application. The first application 221 can manage related data, such as email messages, calendars, and/or calendar notifications. The data may comprise a body and a phone number. It is understood that, the call management system 200 may also comprise a network access unit (not shown) to receive the above data from a network, such as a wireless network, a wired network, and/or a telecommunication network. In some embodiments, the network access unit may be a telecommunication processing unit (not shown), such as a baseband processing unit. The baseband processing unit is a necessary component of an electronic device, such as a mobile phone providing communication capabilities. The baseband processing unit performs related communication operations, such as voice message decoding, error correction decoding, data encryption, demodulation, channeling, and others. The second application 222 may be a dial application. The second application 222 can perform related dialing operations via the network access unit. The operations of the first application 221 and the second application 222 are discussed later. The processing unit 230 performs the call management method of the invention, which will be discussed further in the following paragraphs.

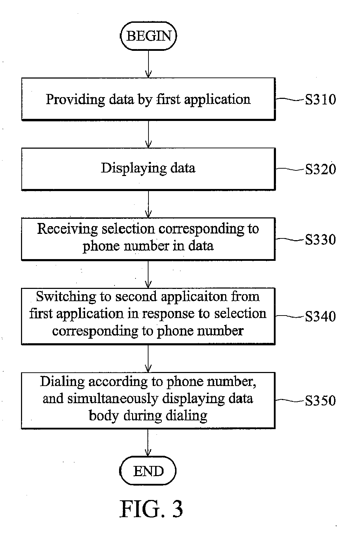

Fig. 3 is a flowchart of an embodiment of a call management method of the invention. The call management method can be used for an electronic device, such as a portable device comprising handheld devices such as a media player, a PDA, a GPS device, a smart phone, a mobile phone, a MID, and a Netbook.

In step S310, the first application 221 is executed to provide data, such as an email message, a calendar, and/or a calendar notification. It is noted that, in some embodiments, an email message is viewed via an email application in step S310. In some embodiments, a calendar is viewed via a calendar application in step S310. In some embodiments, a calendar notification is provided in step S310 when the reminding time of a specific calendar is present. It is understood that, the data comprises a body and a phone number. In step S320, the data is displayed via the touch-sensitive display unit 210. Then, in step S330, a selection corresponding to the phone number in the data is received. It is understood that, in some embodiments, the selection corresponding to the phone number in the data can be directly received via the touch-sensitive display unit 210. In response to the selection corresponding to the phone number, in step S340, the second application 222 is automatically switched to execute from the first application 221. Then, in step S350, a call is made according to the selected phone number in the second application 222, and the body of the data is simultaneously displayed during dialing. It is understood that, the second application 222 can automatically obtain the data when it executes, dials according to the phone number in the data, and simultaneously display the data body during dialing.

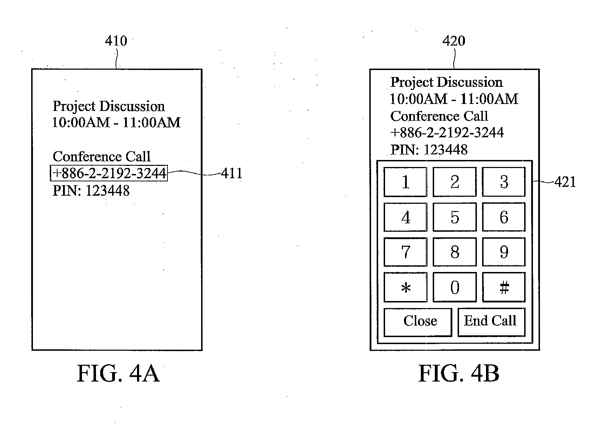

An example is followed. When the calendar application is executed, the touch-sensitive display unit 210 can display a calendar 410, as shown in Fig. 4A. Users can directly select a block 411 corresponding to the phone number to dial via the touch-sensitive display unit 210. After the block 411 is selected, the dial application is automatically switched to execute, and a call is made according to the selected phone number. During dialing, the body of the calendar 410 will be simultaneously displayed in a dial interface 420. It is understood that, in some embodiments, if the selected phone number is used to connect with a conference bridge, an authentication code input interface 421 will be simultaneously displayed with the body in the touch-sensitive display unit 210, providing convenience to users to input the authentication code, as shown in Fig. 4B. It is noted that, in this embodiment, the first application 221 and the second application 222 are respectively used to provide data and perform the dialing operations. However, in some embodiments, the data provision and dialing can be completed by a single application.

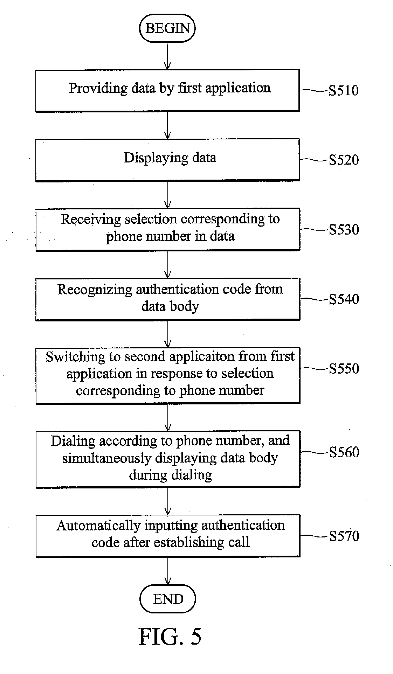

Fig. 5 is a flowchart of another embodiment of a call management method of the invention. The call management method can be used for an electronic device, such as a portable device comprising handheld devices such as a media player, a PDA, a GPS device, a smart phone, a mobile phone, a MID, and a Netbook. It is understood that, a conference call with a conference bridge is made in this embodiment.

In step S510, the first application 221 is executed to provide data, such as an email message, a calendar, and/or a calendar notification. Similarly, in some embodiments, an email message is viewed via an email application in step S510. In some embodiments, a calendar is viewed via a calendar application in step S510. In some embodiments, a calendar notification is provided in step S510 when the reminding time of a specific calendar is present. It is understood that, the data comprises a body and a phone number corresponding to a conference bridge. In step S520, the data is displayed via the touch-sensitive display unit 210. Then, in step S530, a selection corresponding to the phone number in the data is received. Similarly, in some embodiments, the selection corresponding to the phone number in the data can be directly received via the touch-sensitive display unit 210. In response to the selection corresponding to the phone number, in step S540, at least an authentication code is recognized from the body of the data, and in step S550, the second application 222 is automatically switched to execute from the first application 221. Then, in step S560, a call is made to connect with the conference bridge according to the selected phone number in the second application 222, and the body of the data is simultaneously displayed during dialing. After the call with the conference bridge is established, in step S570, the recognized authentication code is automatically input to the conference bridge.

Therefore, the call management systems and methods can automatically switch between applications, and simultaneously display data body during dialing, thereby providing convenience to dialing operations.

Call management systems and methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A call management system for use in an electronic device, comprising:
a touch-sensitive display unit displaying data, and receiving a selection corresponding to a phone number, wherein the data comprises a body and the phone number; and
a processing unit automatically dialing according to the phone number in response to the selection corresponding to the phone number, and simultaneously displaying the body of the data during dialing via the touch-sensitive display unit.

2. The system of claim 1, wherein the processing unit dials to a conference bridge according to the phone number, and the processing unit further simultaneously displays an authentication code input interface with the body via the touch-sensitive display unit.

3. The system of claim 1, wherein the processing unit dials to a conference bridge according to the phone number, and the processing unit further recognizes an authentication code from the body, and automatically inputs the authentication code to the conference bridge after a call corresponding to the conference bridge is established.

4. The system of one of the preceding claims, wherein the data comprises an email message, a calendar, or a calendar notification.

5. The system of one of the preceding claims, wherein the data is provided by a first application, and the processing unit originally executes the first application, and automatically switches to execute a second application from the first application in response to the selection corresponding to the phone number, and dials according to the phone number in the second application.

6. A call management method for use in an electronic device, comprising:
displaying data, wherein the data comprises a body and a phone number;
receiving a selection corresponding to the phone number;
in response to the selection corresponding to the phone number, automatically dialing according to the phone number; and
simultaneously displaying the body of the data during dialing.

7. The method of claim 6, wherein the phone number is used to connect with a conference bridge, and the method further comprises a step of simultaneously displaying an authentication code input interface with the body.

8. The method of claim 6, wherein the phone number is used to connect with a conference bridge, and the method further comprises steps of:
recognizing an authentication code from the body; and
automatically inputting the authentication code to the conference bridge after a call corresponding to the conference bridge is established.

9. The method of one of the preceding claims 6 to 8, wherein the data comprises an email message, a calendar, or a calendar notification.

10. The method of one of the preceding claims 6 to 9, wherein the data is provided by a first application, and a second application is automatically switched to execute from the first application in response to the selection corresponding to the phone number, and the dialing is performed according to the phone number in the second application.
